Europäisches Patentamt

European Patent Office

Office européen des brevets

(11) Veröffentlichungsnummer: **0 039 882**
**B1**

(12) **EUROPÄISCHE PATENTSCHRIFT**

(45) Veröffentlichungstag der Patentschrift:
04.09.85

(21) Anmeldenummer: 81103392.7

(22) Anmeldetag: 05.05.81

(51) Int. Cl.⁴: **G 06 K 9/68**

(54) **Verfahren und Vorrichtung zum automatischen Erkennen eines Bildmusters, insbesondere eines Linienmusters.**

(30) Priorität: **12.05.80 DE 3018170**

(43) Veröffentlichungstag der Anmeldung:
**18.11.81 Patentblatt 81/46**

(45) Bekanntmachung des Hinweises auf die Patenterteilung:
**04.09.85 Patentblatt 85/36**

(84) Benannte Vertragsstaaten:
**CH FR GB LI NL SE**

(56) Entgegenhaltungen:
**DE - A - 2 628 358**
**DE - B - 1 205 743**
**DE - B - 2 358 921**
**DE - C - 2 404 183**
**US - A - 4 110 737**

(73) Patentinhaber: **Siemens Aktiengesellschaft, Berlin und München Wittelsbacherplatz 2, D-8000 München 2 (DE)**

(72) Erfinder: **Köllensperger, Paul, Dipl.-Ing., Engadiner Strasse 36, D-8000 München 71 (DE)**

## Beschreibung

Die Erfindung betrifft ein Verfahren und eine Vorrichtung zur Erkennung von Bild-, insbesondere Linienmustern, mit Hilfe von Abtasteinrichtungen für ein das Muster tragendes Bildfeld, bei dem durch Umsetzen von Bildpunkten in elektrische Signalfolgen und durch Vergleich dieser Signalfolgen mit Signalen eines gespeicherten Musters eine Auffindung des das gesuchte Muster aufweisenden Objektbildes durchgeführt wird.

Der der DE-PS-2 404 183 zugrundeliegende Gegenstand betrifft eine Vorrichtung zur Erkennung der Lage eines Musters, insbesondere zur Erkennung der Oberflächengeometrie eines Halbleiterbauelementes, um dieses automatisch bonden zu können. Zu diesem Zweck ist dieses Lageerkennungssystem so aufgebaut, dass ein oder mehrere örtliche Muster eines Gegenstandes als Standardmuster gespeichert werden, dass die örtlichen Muster und die zweidimensionalen Muster des Gegenstandes, wie sie von einem Bildwandler eingegeben werden, ständig verglichen werden und dass die Koordinatenlage mit der besten Koinzidenz ermittelt wird. Bei diesem Vergleichsverfahren werden die diskreten Amplitudenstützwerke der Korrelationsfunktion unabhängig voneinander von Verschiebekoordinate zu Verschiebekoordinate neu berechnet.

In der DE-A-2 628 358 ist eine Anordnung zum automatischen Erkennen eines Musters, insbesondere zur Lageerkennung eines Bildmusters, beschrieben, bei dem nach jedem Schritt (Verschiebung zwischen Soll- und Istsignal) das Sollsignal neu und vollständig mit dem Istsignal verglichen wird. Auch hierbei werden die diskreten Amplitudenstützwerte der Korrelationsfunktion unabhängig voneinander von Verschiebekoordinate zu Verschiebekoordinate neu berechnet.

Der Erfindung liegt die Aufgabe zugrunde, mit möglichst einfachen Mitteln ein Verfahren und eine Vorrichtung zu schaffen, um aus einer Anzahl von innerhalb des Sichtbereiches der Erkennungsschaltung liegenden Linienmustern entsprechenden Bildmustern ein Muster mit Hilfe vorgegebener Merkmale aufzufinden und dessen relative Lage zu einem definierten Nullpunkt senkrecht zu den Linien des Linienmusters zu ermitteln.

Diese Aufgabe wird mit einem Verfahren nach der Erfindung dadurch gelöst, dass durch fortlaufende Verschiebung bezogen auf vorbestimmte Merkmalsadressen aus den Abtastsignalen des Bildfeldes gebildeter Spaltesignale in einem Speicher um jeweils eine aus einer vorwählbaren Anzahl von Spaltenpunkten gebildeten Spalte mit Hilfe vorbestimmter Merkmalsadressen sowie diesen zugeordneten Gewichtsfaktoren und Merkmalsvorzeichen Eigenschaften der Spaltensignale bewertet und der Grad der Ähnlichkeit zu einem gesuchten Muster in Echtzeit festgestellt wird, indem man je nach Merkmalsvorzeichen die Summen bzw. die Summen der Inversen der den gewichteten Spaltensignalen entsprechenden Zahlenwerte innerhalb gewählter und durch die vorbestimmten Merkmalsadressen definierter Speicherbereiche, die Abschnitten des Abtastsignals entsprechen, bildet.

Bei der Erfindung handelt es sich im Gegensatz zum Stand der Technik nur um eine Bewertung an diskreten Stellen, so dass die Rechenarbeit um ein Vielfaches vermindert wird. Ausserdem ist die Anzahl der Bewertungsstellen (Merkmalsadressen) auf signifikante Merkmale des Sollwertes beschränkt. Darüber hinaus ist der Sollwert nicht voll abgespeichert und wird nur indirekt durch Merkmalsadressen beschrieben.

Je eine mit einem positiven und eine mit einem negativen Vorzeichen versehene Merkmalsadresse bezeichnen einen Speicherbereich, der zum Beispiel einem Balken des Istmusters zugeordnet ist. Derart gebildete Speicherbereiche können auch geschachtelt werden. Wird nun zum Beispiel ein positiver Spaltenwert des Istmusters in den Speicherbereich eingeschrieben, so wird er durch die positive Merkmalsadresse positiv bewertet und aufsummiert. Für jeden eingeschriebenen Wert wird ein Amplitudenwert aus dem Speicherbereich ausgelesen bzw. überschrieben. Dieser wird durch die negative Merkmalsadresse negativ bewertet und von der Summe abgezogen. Die so entstehende Differenz der Summe der bisher eingeschriebenen Amplitudenwerte zu der Summe der bisher ausgelesenen Amplitudenwerte ist mit dem augenblicklichen Inhalt des Speicherbereichs identisch. Eine Möglichkeit der Gewichtung besteht, wenn ein Gewichtungsspeicher mit Rechenwerk vorgesehen wird, der den Merkmalsadressen zugeordnete Gewichtungsfaktoren enthält. Jeder durch eine Merkmalsadresse bewertete Amplitudenwert wird mit Hilfe eines erweiterten Rechenwerkes zusätzlich mit dem entsprechenden Gewichtungsfaktor bewertet. Die Summe der Inhalte der durch die Merkmalsadressen gebildeten Speicherbereiche entspricht einem Amplitudenstützwert der Vergleichsfunktion, wenn der gesamte Istwertspeicher zu Beginn der Korrelation gelöscht wird. Durch taktgesteuertes Ein- und Auslesen der Spaltensignale des Istmusters werden nacheinander alle Amplitudenstützwerte berechnet und die Vergleichsfunktion gebildet.

Der wesentliche Vorteil der Erfindung liegt darin begründet, dass nach diesem Verfahren nur noch die Änderung eines Amplitudenstützwertes zum nachfolgenden berechnet wird. Das Verfahren nach der Erfindung eignet sich sehr gut zur eindimensionalen Lageerkennung von gestörten und verrauschten Linienmustern.

Bei der bei der Erfindung verwendeten Justiermarkengeometrie verringert sich die nötige vergleichbare Anzahl von Rechenoperationen pro Rasterpunkt erheblich. Ausserdem können sehr vorteilhaft höher integrierte Halbleiterspeicher mit freiem Zugriff anstelle von unflexiblen Schieberegistern verwendet werden. Dadurch besteht die Möglichkeit, die Länge des Vergleichsbereiches bis hin zur maximal zulässigen Istmusterbreite für eine optimale Verarbeitung an die Breite der Justiermarke anzupassen. Weiters verringert sich der Umfang des Vergleichers erheblich, wodurch der Bauteileaufwand der gesamten Auswerteelektronik nach der Erfindung wesentlich reduziert, die Zuverlässigkeit und Überschaubarkeit entsprechend gesteigert wird.

Weitere Einzelheiten der Erfindung ergeben sich aus den Figuren, der Beschreibung und den Unteransprüchen.

Die Erfindung wird an Hand der Figuren erläutert. Es zeigen:

Figur 1 ein Blockschaltbild eines Korrelators nach der Erfindung

Figur 2 ein Blockschaltbild der dabei verwendeten Vergleicherbaugruppe.

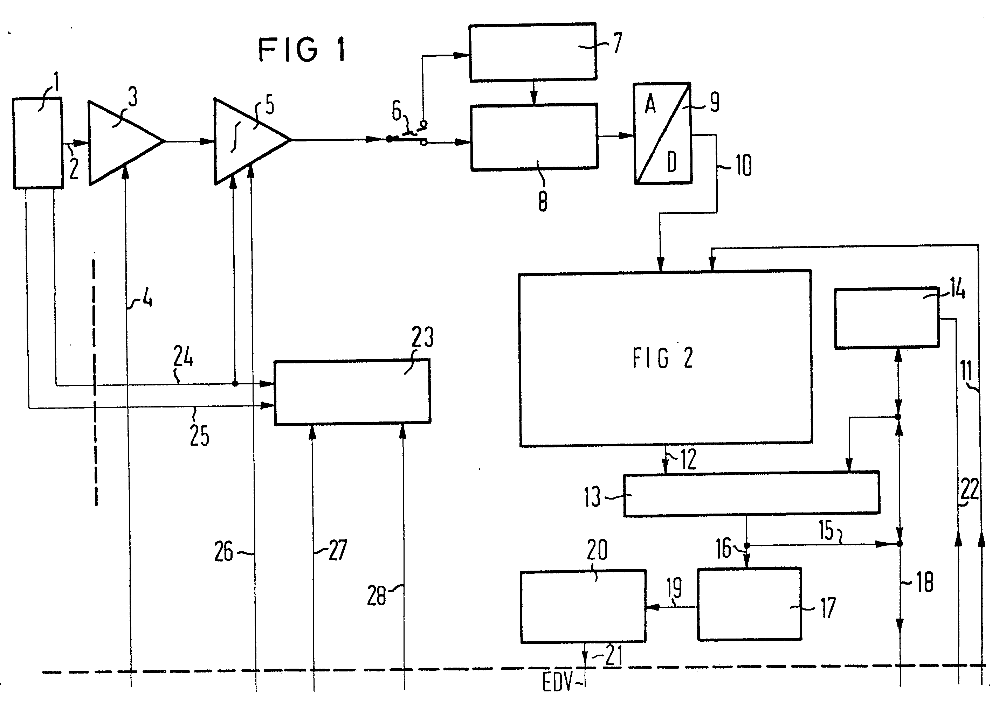

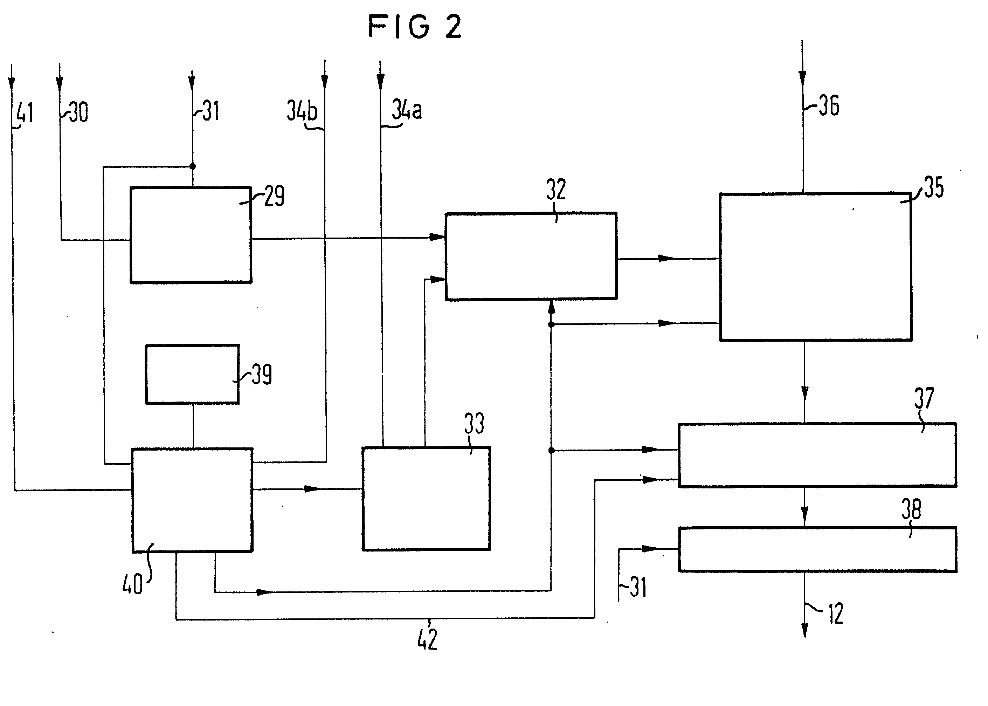

In der Figur 1 ist links oben ein Istmusterdetektor 1 (z.B. ein Elektronendetektor) angedeutet, der über die Leitung 2 Detektorsignale auf einen einstellbaren Verstärker 3 gibt. Auf den über die Leitung 4 einstellbaren Verstärker 3 folgt ein Integrator 5 (z.B. ein als Integrator beschalteter Operationsverstärker), dessen Ausgang zu einem Umschalter 6 geführt ist. In der oberen Lage stellt der Schalter die Verbindung zu einem Maximum- und Minimum-Detektor 7 (z.B. bestehend aus einem A-D-Wandler, aus Vergleichern 74 S 85 und Speichern 74 LS 273 und aus einem D-A-Wandler) und in der unteren Lage zu einer Signalskalierung 8 (z.B. bestehend aus als Substrahierer geschalteten 74 S 283 zur Ermittlung des Signalhubes, aus einem Operationsverstärker zur Subtraktion des Minimums und einem Multiplizierer zur Signalverstärkung) her. Auf die Signalskalierung 8 folgt ein Analog-Digital-Wandler 9, dessen Ausgang 10 auf die in der Figur 2 besonders dargestellte Vergleicherbaugruppe führt. Ferner kommen über einen weiteren Eingang 11 gespeicherte Signalmerkmale von einer nicht dargestellten Datenverarbeitungsanlage EDV.

Nach der Figur 1 schliesst sich an den Ausgang 12 der Vergleicherbaugruppe ein Addierwerk 13 (der z.B. mit Bausteinen 74 LS 283, 74 LS 244 und 74 LS 273 als Pufferspeicher aufgebaut ist) an. Ein Summenspeicher (z.B. bestehend aus LZ 114) ist mit 14 bezeichnet. Der Ausgang vom Addierer 13 über die Leitung 15 mit dem Summenspeicher 14 und über die Leitung 16 mit einem Maximum/Minimum-Detektor 17 (z.B. bestehend aus 74 LS 273 und 74 LS 85) verbunden. Der Ausgang 18 des Summenspeichers führt zu der nicht dargestellten Datenverarbeitungsanlage. Über die Leitung 19 ist der Maximum/Minimum-Detektor 17 mit einer Koordinatenermittlung 20 bestehend aus einem Koordinatenzähler und Koordinatenspeicher verbunden. Der Ausgang 21 dieser Koordinatenermittlung führt ebenfalls zu der Datenverarbeitungsanlage, die über die Leitung 22 Adressen für den Summenspeicher liefert.

Eine Steuerung 23 (z.B. realisiert mit Bausteinen der Serie TTL 74 LS...) erhält über die Leitung 24 Takt- und über die Leitung 25 Startsignale von dem Ist-Muster-Detektor 1. Über die Leitung 26 ist die Integrationszeit des Integrators 5 einstellbar. Über die Leitung 27 erhält die Steuerung 23 von der EDV-Anlage die Zahl der aufzusummierenden Vergleichsfunktionen vorgegeben und über 28 ein komplexes Signal, das im Zusammenhang mit der Funktionsbeschreibung erläutert wird. Auf die Darstellung von besonderen Steuerleitungen zwischen den einzelnen Bausteinen wurde mit Rücksicht auf die Übersichtlichkeit verzichtet.

Nach der Darstellung in der Figur 2 erhält ein programmierbarer Adresszähler 29 (z.B. bestehend aus einem programmierten PROM 74 S 472 und einem Speicher 74 LS 273) über die Leitung 30 ein Bereichsumschaltesignal und über die Leitung 31 den Verschiebetakt und das Bildendesignal. Der Ausgang des Adresszählers 29 führt zu einem Addierer und Zwischenspeicher 32 (z.B. bestehend aus Addierern 74 S 283 und Speichern 74 S 174), der ausserdem noch über einen weiteren Eingang von einem Speicher 33 (z.B. bestehend aus Speichern 74 S 189) versorgt wird. In diesen Speicher werden über die Leitungen 34 von der EDV-Anlage Adressen eingeschrieben. Die Ergebnisse vom Addierer 32 bilden die Adressen für einen Istwertspeicher 35 (z.B. bestehend aus Speichern 74 S 200), der über die Leitung 36 Istwertinformationen erhält. Die Ausgänge des Istwertspeichers 35 werden einem Rechenwerk 37 (z.B. im wesentlichen bestehend aus 74 S 174, 74 S 283, 74 S 381 und 74 S 169) mit anschliessendem Pufferspeicher 38 (z.B. bestehend aus 74 LS 273) zugeführt. Ein Taktgeber 39 gibt den Takt für eine Speicherablaufsteuerung 40 (z.B. bestehend aus einem 74 S 288 oder einem RAM-Speicher) ab, deren Steuersignale dem Speicher 33, dem Zwischenspeicher des Addierers 32, dem Istwertspeicher 35 und dem Rechenwerk 37 mit Pufferspeicher 38 zugeführt werden. Zusätzlich kann ein von dem Merkmalsadressenspeicher adressierter Gewichtungsspeicher vorgesehen sein, der durch Ansteuerung des Rechenwerkes 37 eine abschnittsweise Gewichtung der Werte an dessen gepufferten Ausgang 12 bewirkt.

Der Funktionsablauf geht wie folgt vor sich:

Die Bildinformation vom Istmusterdetektor 1 (zum Beispiel ein Elektronendetektor mit einer Elektronenstrahlablenkeinrichtung) wird dem einstellbaren Verstärker 3 zugeführt und dort das Signal bezüglich der Amplitude für den anschliessenden Integrator 5 (zum Beispiel Operationsverstärker mit spezieller Beschaltung) aufbereitet. Der Verstärker 3, zum Beispiel ebenfalls ein Operationsverstärker, macht eine Grobanpassung des Detektorsignals an den Arbeitsbereich des Integrators 5. Der Integrator integriert das angepasste Detektorsignal amplitudenmässig über eine bestimmte Zeit (Spalte), die vom Takt über die Leitung 24 vorgegeben wird. In einem ersten Signaldurchlauf wird das integrierte Signal (Spaltensignal) über den Schalter 6 dem Maximum/Minimum-Detektor 7 zugeführt, der das jeweilige Signal-Maximum/Minimum ermittelt und speichert. Bei einem folgenden Signaldurchlauf liegt der Schalter 6 in der unteren Lage, so dass das integrierte Signal der Signalskalierung 8 zugeht. Die Signalskalierung berechnet aus dem Spannungswert des Minimums einen Gleichspannungskorrekturwert und aus der Differenz zwischen der Maximal/Minimal-Spannung einen Verstärkungskorrekturwert. Der Gleichspannungskorrekturwert wird abhängig von der vorgefundenen Minimalspannung so eingestellt, dass das Minimum einen definierten vorgegebenen Spannungswert annimmt.

Der Verstärkungswert wird abhängig von der vorgefundenen Maximum/Minimum-Differenz so eingestellt, dass die Differenz einen bestimmten vorgegebenen Wert einnimmt. Diese Skalierung hat den Zweck, den im späteren Signalverlauf vorgegebenen Digitalstellenbereich voll ausnützen zu können.

Die Umsetzung des skalierten Analogsignals in digitale Information wird in einem handelsüblichen A/D-Wandler 9 vorgenommen. Das digitalisierte Detektorsignal wird über die Leitung 10 in den Vergleicher eingelesen, der in der Figur 2 dargestellt ist. Der Vergleicher hat die Aufgabe, das digitalisierte Detektorsignal (Ist-Muster) mit den von der EDV-Anlage über die Leitung 11 vorgegebenen Merkmalen zu vergleichen. Anhand der Figur 2 wird die Funktion des Vergleichers vollständig beschrieben.

Die aus dem Vergleicher über die Leitung 12 taktweise kommenden Ergebnisse werden dem Addierwerk 13 zugeführt und spaltenrichtig zu den Summanden aus dem vorhergehenden Durchlauf, die aus dem Summenspeicher 14 kommen, addiert. Die daraus resultierenden Ergebnisse überschreiben die alten Werte im Summenspeicher und dienen als neue Summanden beim nächsten Vergleichsdurchlauf. Dieser Vorgang wird solange wiederholt, bis die Zahl der von der EDV-Anlage über die Leitung 27 vorgegebenen Durchläufe erreicht ist oder bis eine Summenfunktion aus dem Speicher 14 als ausreichend angesehen wird und die vorgegebenen Durchläufe begrenzt werden. Mit ausreichender Summenfunktion ist gemeint, dass z.B. das Signal-Rauschverhältnis einen bestimmten Wert überschreitet, das Maximum der Summenfunktion einen Schwellwert übersteigt oder dass die Steigung der Summenfunktion im Bereich des Maximums einen bestimmten Wert übersteigt.

Das Ergebnis aus dem Summenspeicher 14 wird über den Addierer 13 dem Maximum/Minimum-Detektor 17 zugeführt. Jeder Adresse des Summenspeichers ist eine Lagekoordinate zugeordnet. In der Einheit 20 ist ein Koordinatenzähler mit einem Koordinatenspeicher kombiniert. Sobald ein Maximum ermittelt ist, wird auf den Speicher ein Impuls gegeben, der die Übernahme des Koordinatenzählerstandes in den Speicher auslöst. Der Impuls wird erzeugt, wenn im Maximumdetektor ein Maximum der Summenfunktion gefunden wird. Die dem absoluten Maximum entsprechenden Koordinaten werden über die Leitung 21 an die EDV-Anlage ausgegeben. Damit ist der Amplitudenwert des absoluten Maximums festgelegt und durch die EDV-Anlage über die Adressenleitung 22 anwählbar. Ausserdem können ausgehend von der Maximumkoordinate beliebige andere Werte der Summenfunktion von der EDV-Anlage angewählt und über die Leitung 18 zur EDV-Anlage übertragen werden. Diese zusätzlichen Werte können zur genaueren Bestimmung von Positionen ausgewertet werden.

Den internen Ablauf der Baugruppe koordiniert der Steuerungsbaustein 23.

Die Leitungen für die Merkmalsadresseneingabe, die in der Figur 1 mit 11 bezeichnet sind, sind in der Figur 2 mit 34a und 34b markiert. Die über diese Leitungen kommenden Werte setzen sich zusammen aus den Merkmalsadressen, die in den Speicher 33 eingeschrieben werden und aus den Adressen für den Speicher 33, die über die Ablaufsteuerung 40 dem Speicher 33 zugeführt werden. Der Ausgang 10 vom Analog-Digitalwandler 9 entspricht der Leitung 36 in der Figur 2. Über die Leitungen 31 wird ein aus dem Taktsignal 24 in der Steuerung 23 abgeleiteter Verschiebetakt 31 und ein Bildendesignal eingeleitet. Die Leitung 30 kommt von der EDV-Anlage. Über sie kann eine von zwei im Gerät vorprogrammierten Vergleichbereichslängen ausgewählt werden.

Über die Leitung 41 von der EDV-Anlage kann eine Anpassung des Arbeitszyklus der Speicherablaufsteuerung 40 an unterschiedliche Merkmalsadressengruppen vorgenommen werden.

Die über die Leitung 10 bzw. 36 aus dem Analog-Digital-Wandler kommenden Amplitudenwerte gelangen in den Istwert-Speicher 35, in dem sie nach Adressierung gespeichert werden. Die Adressierung erfolgt durch den programmierbaren Zähler 29 und über den Addierer 32, wobei die Ausgänge von dem Speicher 33 einen gleichbleibenden definierten Wert haben. Damit wird der Zählerstand des Adresszählers 29 durch den Addierer 32 mit einer Konstanten beaufschlagt. Mit jedem weiteren Verschiebetakt, der mit dem Istwert synchron läuft, erhöht sich der Zählerstand in dem Adresszähler 29 gemäss einer festgelegten Zahlenfolge. Mit diesem Adresszähler können beliebige und mehrere voneinander unabhängige Zahlenfolgen durch die Programmierung des PROM's realisiert werden.

Die Auswahl der Zahlenfolgen erfolgt über eine der Leitungen 31.

Nach jedem neu eingespeicherten Istwert werden aus dem Speicher 33 die durch die EDV zu Beginn eingeschriebenen Merkmalsadressen im Addierer 32 seriell zum augenblicklichen Zählerstand 29 addiert und an den Istwert-Speicher 35 weitergegeben. Dieser Vorgang läuft jeweils zwischen zwei Verschiebetaktimpulsen ab.

Immer wenn vom Speicher 33 über den Addierer 32 Adressen an den Speicher 35 angelegt werden und somit definierte Instwertamplituden angewählt werden, werden diese an das Rechenwerk 37 ausgegeben und dort in Abhängigkeit der Vorzeichenleitung 42 zu dem Rechenwerkinhalt addiert oder subtrahiert.

Gleichzeitig mit der Speicherung einer neuen Istwertamplitude in den Speicher 35 erfolgt die Übernahme des Inhaltes des Rechenwerks 37 in den Pufferspeicher 38. Die Speicherung der neuen Istwertamplitude erfolgt, wenn der Zyklus des Speichers 33 einmal abgelaufen ist und wieder auf seinem definierten Anfangswert steht. Über die Leitung 31 kommt dann ein neuer Verschiebetaktimpuls auf den Adresszähler 29. In dem Addierer 32 wird dann aus dem neuen Stand des Adresszählers 29 und aus dem Inhalt des Merkmalspeichers 33 eine Adresse für den Istwert-Speicher 35 gebildet und in die dadurch angewählte Speicherzelle der neue Amplitudenstützwert eingeschrieben. Immer wenn vom Rechenwerk 37 ein Wert an den Pufferspeicher 38 weitergegeben wird, steht dieser neue Wert am Ausgang 12 (Figur 1) der Vergleichsbaugruppe an.

Die Speicherablaufsteuerung 40 enthält einen programmierbaren Zähler, der die Adressen für den Speicher 33 während des Vergleichsvorganges liefert und analog dem Adresszähler 29 aufgebaut ist. Zusätzlich enthält der Speicher dieses programmierbaren Zählers die Freigabe für das Taktraster für das Rechenwerk 37, das Schreib-Lesesignal für den Istwert-Speicher 35 und das Merkmalsvorzeichen für das Rechenwerk 37. Der Pufferspeicher der Speicherablaufsteuerung 40 und der Addierer 32 werden von einem Takt versorgt, der von einem Oszillator 39 abgeleitet wird. Der Takt wird abhängig vom Verschiebetakt freigegeben und abhängig vom Stand des programmierten Zählers in der Speicherablaufsteuerung 40 abgeschaltet. Die Abschaltung erfolgt durch ein im Festwertspeicher hinterlegtes Signal, das bei einem definierten Zählerstand ausgelesen wird.

**Patentansprüche**

1. Verfahren zur Erkennung von Bild-, insbesondere Linienmustern, mit Hilfe von Abtasteinrichtungen für ein das Muster tragendes Bildfeld, bei dem durch Umsetzen von Bildpunkten in elektrische Signalfolgen und durch Vergleich dieser Signalfolgen mit Signalen eines gespeicherten Musters eine Auffindung des das gesuchte Muster aufweisenden Objektbildes durchgeführt wird, dadurch gekennzeichnet, dass durch fortlaufende Verschiebung bezogen auf vorbestimmte Merkmalsadressen aus den Abtastsignalen des Bildfeldes gebildeter Spaltensignale in einem Speicher um jeweils eine aus einer vorwählbaren Anzahl von Spaltenpunkten gebildeten Spalte mit Hilfe vorbestimmter Merkmalsadressen sowie diesen zugeordneten Gewichtsfaktoren und Merkmalsvorzeichen Eigenschaften der Spaltensignale bewertet und der Grad der Ähnlichkeit zu einem gesuchten Muster in Echtzeit festgestellt wird, indem man je nach Merkmalsvorzeichen die Summen bzw. die Summen der Inversen der den gewichteten Spaltensignalen entsprechenden Zahlenwerte innerhalb gewählter und durch die vorbestimmten Merkmalsadressen definierter Speicherbereiche, die Abschnitten des Abtastsignals entsprechen, bildet.

2. Verfahren nach Anspruch 1, dadurch gekennzeichnet, dass die Summe innerhalb eines definierten Speicherbereichs derart gebildet wird, dass nach Abtastung einer neuen Spalte der in einen Bereich neu eingeschriebene Zahlenwert je nach Merkmalsvorzeichen auf die vorher berechneten Summen gewichtet aufsummiert oder von ihr subtrahiert, die nicht mehr enthaltene Zahl entsprechends subtrahiert oder aufsummiert wird und dieser Vorgang bis zum letzten Spaltenwert des Bildfeldes wiederholt und so eine Vergleichsfunktion gebildet wird.

3. Verfahren nach Anspruch 2, dadurch gekennzeichnet, dass auf die über eine Bildabtastung ermittelte Vergleichsfunktion entsprechend der Grösse der additiven und unabhängigen Störanteile der Abtastsignale weitere Vergleichsfunktionen neuer Bildabtastungen spaltendeckend aufsummiert werden und über einen Zahlenvergleich der Amplitudenstützpunkte Extremwerte der so gebildeten Summenfunktion ermittelt werden.

4. Verfahren nach Anspruch 3, dadurch gekennzeichnet, dass aus der Lage der Extremwerte innerhalb der Summenfunktion oder einer einzelnen Vergleichsfunktion mit Hilfe eines Koordinatenzählers die Spaltenkoordinate (Lage des gesuchten Musters) und aus signifikanten Amplitudenwerten die Güte der Erkennung ermittelt wird.

5. Vorrichtung zur Erkennung von Bild-, insbesondere Linienmustern, mit Hilfe von Abtasteinrichtungen für ein das Muster tragendes Bildfeld, bei dem durch Umsetzen von Bildpunkten in elektrische Signalfolgen und durch Vergleich dieser Signalfolgen mit Signalen eines gespeicherten Musters eine Auffindung des das gesuchte Muster aufweisenden Objektbildes durchgeführt wird, dadurch gekennzeichnet, dass durch fortlaufende Verschiebung bezogen auf vorbestimmte Merkmalsadressen aus den Abtastsignalen des Bildfeldes gebildeter Spaltensignale in einem Speicher um jeweils eine aus einer vorwählbaren Anzahl von Spaltenpunkten gebildeten Spalte mit Hilfe vorbestimmter Merkmalsadressen sowie diesen zugeordneten Gewichtsfaktoren und Merkmalsvorzeichen Eigenschaften der Spaltensignale bewertet und der Grad der Ähnlichkeit zu einem gesuchten Muster in Echtzeit festgestellt wird, indem man je nach Merkmalsvorzeichen die Summen bzw. die Summen der Inversen der den gewichteten Spaltensignalen entsprechenden Zahlenwerte innerhalb gewählter und durch die vorbestimmten Merkmalsadressen definierter Speicherbereiche, die Abschnitten des Abtastsignals entsprechen, bildet, und dass ferner ein programmierbarer Adresszähler (29), ein Addierer und Zwischenspeicher (32), ein Istwertspeicher (35) mit anschliessendem Rechenwerk (37) und Pufferspeicher (38), ein Taktgeber (39), eine Speicherablaufsteuerung (40) und ein Speicher für Merkmaladressen (33) vorgesehen sind.

6. Vorrichtung nach Anspruch 5, dadurch gekennzeichnet, dass zusätzlich ein von dem Merkmalsadressenspeicher adressierter Gewichtungsspeicher vorgesehen ist, der durch Ansteuerung des Rechenwerkes (37) eine abschnittsweise Gewichtung der Werte an dessen gepufferten Ausgang (12) bewirkt.

7. Vorrichtung nach Anspruch 5 zur Durchführung des Verfahrens nach den Ansprüchen 2 bis 4, dadurch gekennzeichnet, dass zusätzlich ein Summenspeicher (Summenfunktion) (14), ein Addierwerk (13), ein Maximum- oder Minimum-Detektor (17), eine Koordinatenermittlung (29) und einer Steuerung (23) vorgesehen ist.

## Claims

1. A method of recognising image- un particular linepatterns, with the assistance of scanning devices for an image field carrying the pattern, wherein, by converting image points into electrical signal sequences and by comparing the signal sequences with signals of a stored pattern, the object image containing the sought-after pattern is realised, characterised in that by continuous displacement, relative to predetermined feature addresses, of column signals, which are formed in a store from the scanning signals of the image field in each case by a column which is formed from a preselectable number of column points, with the assistance of predetermined feature addresses and weighting factors and feature signs assigned to said feature addresses, properties of the column signals are evaluated and the degree of similarity with a sought-after pattern is determined in real time, in that, in accordance with the feature signs, the sums, or the sums of the inverses, of the numerical values which correspond to the weighted column signals are formed within selected storage zones which are defined by the predetermined feature addresses and which correspond to sections of the scanning signal.

2. A method as claimed in claim 1, characterised in that the sum is formed within a dertermininate storage zone in such manner that following the scanning of a new column, in accordance with the feature sign, the numerical value which has been newly entered into a zone is added, in weighted fashion, to the previously calculated sums or is subtracted therefrom, the number which is no longer contained is correspondingly subtracted or added, and this procedure is continued until the last column value of the image field and thus a comparison function is formed.

3. A method as claimed in claim 2, characterised in that to the comparison function which is determined by means of an image scanning, in accordance with the value of the additive and independent interference components of the scanning signals, there are added further comparison functions of new image scannings so as to cover the columns, and by means of a numerical comparison of the amplitude support points, extreme values of the sum function formed in this way are determined.

4. A method as claimed in claim 3, characterised in that the column coordinate (position of the sought-after pattern) is determined from the position of the extreme values within the sum function or from an individual comparison function with the assistance of a coordinate counter, and the value of the recognition is determined from significant amplitude values.

5. A device for the recognition of image- in particular line-patterns, with the assistance of scanning devices for an image field carrying the pattern, wherein by converting image points into electrical signal sequences and by comparing these signal sequences with signals of a stored pattern, the object image which contains the sought-after pattern is realised, characterised in that by the continuous displacement, relative to predetermined feature addresses, of column signals, formed in a store from the scanning signals of the image field in each case by a column which is formed from a preselectable number of column points, with the assistance of predetermined feature addresses and weighting factors and feature signs assigned to said feature addresses, properties of the column signals are evaluated and the degree of similarity with a sought-after pattern is determined in real time, in that, in accordance with the feature signs, the sums, or the sums of the inverses, of the numerical values which correspond to the weighted column signals are formed within selected storage zones which are defined by the predetermined feature addresses and which correspond to sections of the scanning signal, and that there is further provided a programmable address counter (29), an adder and intermediate store (32), an actual value store (35) followed by a calculating unit (37) and buffer store (38), a clock pulse generator (39), a store flow control unit (40), and a store for feature addresses (33).

6. A device as claimed in claim 5, characterised in that there is additionally provided a weighting store which is addressed by the feature address store and which, by driving the calculating unit (37), carries out a sectionwise weighting of the values at the buffered output (12) thereof.

7. A device as claimed in claim 5 for the execution of the method claimed in claims 2 to 4, characterised in that there is additionally provided a sum store (sum function) (14), an adder (13), a maximum- or minimumdetector (17), a coordinate determining device (20) and a control unit (23).

## Revendications

1. Procédé pour reconnaître des structures d'image, en particulier des structures de lignes, à l'aide de dispositifs d'exploration pour un champ d'image portant la structure, dans lequel la transformation de points d'image en trains de signaux électriques et par comparaison de ces trains de signaux avec des signaux d'une structure mémorisée, une localisation est effectuée de l'image d'objet présentant la structure recherchée, caractérisé en ce que, par décalage continu, dans une mémoire, par rapport à des adresses de caractéristiques préfixées, de signaux d'intervalle formés à partir des signaux d'exploration du champ d'image, de chaque fois un intervalle formé d'un nombre de points d'intervalle pouvant être choisis d'avance, à l'aide d'adresses de caractéristiques préfixées, ainsi que de facteurs de pondération et de signes de caractéristiques qui leur sont conjugués, des propriétés des signaux d'intervalle sont évaluées et le degré de ressemblace avec une structure recherchée est établi en temps réel, du fait que, suivant le signe de la caractéristique, on forme les sommes ou les sommes des inverses des nombres correspondant aux signaux d'intervalle pondérés, à l'intérieur de zones de mémoire sélectionnées et définies par les adresses de caractéristiques préfixées, qui correspondent à des parties du signal d'exploration.

2. Procédé selon la revendication 1, caractérisé en ce que la somme est formée de telle manière, à l'intérieur d'une zone de mémoire définie, qu'après exploration d'un nouvel intervalle, le nombre nouvellement inscrit dans une zone, après pondération et suivant le signe de la caractéristique, est ajouté aux sommes précédemment calculées ou en est déduit, le nombre qui n'est plus contenu est déduit ou ajouté en conséquence et ce processus est répété jusqu'à la dernière valeur d'intervalle du champ d'image, de manière à former ainsi une fonction de pondération.

3. Procédé selon la revendication 2, caractérisé en ce que la fonction de comparaison, déterminée au moyen d'une exploration d'image, est totalisée avec coïncidence des colonnes, suivant la grandeur des fractions perturbatrices additives et indépendantes des signaux d'exploration d'autres fonctions de comparaison de nouvelles explorations d'image, et des valeurs extrêmes de la fonction de totalisation ainsi formée sont déterminées par une comparaison de nombres des points de reprise d'amplitude.

4. Procédé selon la revendication 3, caractérisé en ce que, à partir de la position des valeurs extrêmes à l'intérieur de la fonction de totalisation, ou d'une seule fonction de comparaison, on détermine les coordonnées d'intervalle (position de la structure recherchée) à l'aide d'un compteur de coordonnées et on détermine la qualité de la reconnaissance à partir de valeurs d'amplitude significatives.

5. Dispositif pour reconnaître des structures d'image, en particulier des structures de lignes, à l'aide de dispositifs d'exploration pour un champ d'image portant la structure, dans lequel la transformation de points d'image et trains de signaux électriques et par comparaison de ces trains de signaux avec des signaux d'une structure mémorisée, une localisation est effectuée de l'image d'objet présentant la structure recherchée, caractérisé en ce que, par décalage continu, dans une mémoire, par rapport à des adresses de caractéristiques préfixées, de signaux d'intervalle formés à partir des signaux d'exploration du champ d'image, de chaque fois un intervalle formé d'un nombre de points d'intervalle pouvant être choisis d'avance, à l'aide d'adresses de caractéristiques préfixées, ainsi que de facteurs de pondération et de signes de caractéristiques qui leur sont conjugués, des propriétés des signaux d'intervalle sont évaluées et le degré de ressemblance avec une structure recherchée est établi en temps réel, du fait que, suivant le signe de la caractéristique, on forme les sommes ou les sommes des inverses des nombres correspondants aux signaux d'intervalle pondérés, à l'intérieur de zones de mémoire sélectionnées et définies par les adresses de caractéristiques préfixées, qui correspondent à des parties de signal d'exploration, et en ce qu'il comprend un compteur d'adresses (29) programmable, un additionneur et mémoire intermédiaire (32), une mémoire de valeur réelle (35) suivie d'un organe logique de calcul (37) et d'une mémoire tampon (38), une horloge (39), une commande de mémorisation (40) et une mémoire pour des adresses de caractéristiques (33).

6. Dispositif selon la revendication 5, caractérisé en ce qu'il comprend en plus une mémoire de pondération adressée par la mémoire d'adresses de caractéristiques, qui, sous la commande de l'organe logique de calcul (37), produit une pondération sectionnée des valeurs à sa sortie tamponnée. (12).

7. Dispositif selon la revendication 5 pour la mise en œuvre du procédé selon les revendications 2 à 4, caractérisé en ce qu'il comprend en plus un totalisateur ou mémoire de totalisation (fonction de totalisation) (14), un additionneur (13), un détecteur de maximum ou minimum (17), un dispositif de détermination de coordonnées (20) et une commande (23).

FIG 1

FIG 2

EDV

0 039 882

# FIG 2

0 039 882